# EUROPEAN PATENT APPLICATION

(11) **EP 4 556 226 A1**
(43) Date of publication of application: **21.05.2025**
(21) Application number: 23210369.7
(22) Date of filing: 16.11.2023
(51) Int. Cl.: B32B 27/36, B32B 1/00, B32B 7/02, B32B 7/12, B32B 27/08, B32B 27/10, B32B 27/18

(54) **BIO-BASED POLYMER BEVERAGE CAPSULES**

(71) Applicant: Société des Produits Nestlé S.A., 1800 Vevey (CH)
(72) Inventor: BOURG, Violette, Catherine, Marguerite, 01220 Divonne Les Bains (FR)

(57) **Abstract**

The present invention relates to capsules for preparation of a beverage upon injection of liquid under pressure into the capsule, wherein the capsule body comprises or consists of a biopolymer film comprising polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.

## Description

### Field of the invention

The present invention relates to capsules for preparation of a beverage upon injection of liquid under pressure into the capsule, wherein the capsule body comprises or consists of a biopolymer film.

### Background of the invention

Capsules for beverage preparation in a beverage preparation device are well known, for example coffee capsules. Beverage capsules can both reduce the time needed to brew a beverage and simplify the brewing process by eliminating the need to measure out portions, flavourings, and additives from large bulk containers. Beverage capsules can also help to keep the unused product fresher by individually packaging portions separately without exposing the entire batch to air and light.

Beverage capsules may be manufactured from plastics such as polyolefins, that are generally injected or thermoformed to obtain a cup-shaped body that is subsequently filled with a substance for preparation of a beverage and then closed with a cover to close the capsule in a gas and moisture tight manner. Typically, to prepare the beverage, the beverage capsule is inserted into a beverage preparation device, liquid is injected under pressure into the capsule, and the beverage is dispensed through the capsule cover.

With increasing environmental awareness, and in order to ensure that plastic waste is reduced, there is a need for new beverage capsule packaging solutions that are either biodegradable after use or recyclable. For example, such that the used capsule can either be composted or recycled in a recycling stream. Extensive efforts are being made to develop new beverage capsule packaging materials that are rapidly and easily biodegradable or recyclable, including for example packaging materials comprising biodegradable polymers produced by living organisms, such as aliphatic biopolyesters.

However, many biopolyesters do not have sufficient barrier properties, to ensure freshness of the substance for preparation of the beverage over the lifetime of the capsule, and especially during storage of the beverage capsule until use. For example, polyhydroxyalkanoates (PHAs) are biodegradable thermoplastic polyesters derived from microorganisms, which can provide a good barrier to water vapour, but which do not have good oxygen barrier properties. Polyglycolide (PGA) is a good barrier to both moisture and oxygen, but is sensitive to hydrolysis, which can result in a loss of a barrier performance.

Modification of biopolymers is one way to improve their properties and achieve property combinations required for specific applications. One modification technique is blending. However, blending of biopolyesters can be complex. For example, the blending of PHA and PGA is complex because the melting temperature of PGA is > 240°C and the melting temperature of PHA < 180°C. Alternatively, multi-layered materials may be considered, since multi-layered films may have better mechanical, barrier and controlled release properties compared to mono-layered films. However, it can be challenging to form biopolyester-based multi-layered films. For example, PHA is typically too stiff and fragile to successfully prepare multilayer films and can be difficult to compatibilize with other biopolyesters.

### Summary of the invention

The present inventors have developed a beverage capsule comprising a multi-layered biopolymer film, wherein the biopolymer film comprises PHA and PGA. By sandwiching the PGA between two layers of PHA, the PGA is protected from hydrolysis and provides excellent long-term moisture and oxygen barrier properties. To improve flexibility and toughness of the PHA layer and compatibilization of the PHA and PGA layers, the PHA is chemically modified with one or more chain extenders and/or one or more compatibilizers. Thus, the multi-layered biopolymer film has improved toughness and flexibility compared to one in which the PHA layer has not been chemically modified.

The present inventors have therefore overcome the technical limitations of existing multi-layer biopolyester films, and provided a biopolymer film that has excellent properties for use in beverage capsules. In particular, the multi-layer biopolymer film of the present invention has excellent moisture and oxygen barrier properties and reduced sensitivity to hydrolysis. The multi-layer biopolymer film is thermally stable, allowing use under high temperature conditions in a beverage preparation device. The multi-layer biopolymer film is biodegradable in soil, home composting, industrial compositing, and marine conditions.

In one aspect, the present invention provides a biopolymer film comprising polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.

Any suitable PHA may be used in the present invention. Suitably, the PHA is selected from poly(3-hydroxybutyrate) (PHB), poly(3-hydroxyvalerate) (PHV), poly(3-hydroxybutyrate-co-3-hydroxyvalerate) (PHBV), poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxy undecenoate) (PHU), poly(3-hydroxy octanoate-co-undecenoate) (PHOU), and any copolymer and/or blend thereof. Suitably, the PHA is selected from medium-chain length PHAs and long-chain length PHAs. Suitably, the PHA has a molecular mass of from about 50 kDa to about 300 kDa. Suitably, the PHA has a melting point of 180°C or less, 170°C or less, 160°C or less, or 150°C or less.

The PHA may be functionalised to increase the number of reactive sites (e.g. carboxyl reactive sites via carboxylation, hydroxyl reactive sites via hydroxylation, etc.) for subsequent chemical modification. Suitably, the PHA is functionalised, for example by carboxylation, hydroxylation, epoxidation, or by grafting.

The PHA may undergo chain extension to improve the processability of the PHA. For example, to improve melt strength/viscosity and enhance processability of the PHA, which is known to be fragile, especially for high deformation processes such as blown film extrusion, thermoforming, etc. The PHA may be modified with any suitable chain extenders. Suitably, the one or more chain extenders are addition-type chain extenders that react with carboxyl and/or hydroxyl terminal groups. Suitably, the one or more chain extenders are multi-functional chain extenders. In one embodiment, the one or more chain extenders comprise or consist of one or more addition-type chain extenders that react with carboxyl terminal groups. In one embodiment, the one or more chain extenders comprise or consist of one or more addition-type chain extenders that react with hydroxyl terminal groups. In one embodiment, the one or more chain extenders comprise or consist of one or more addition-type chain extenders that react with carboxyl terminal groups and hydroxyl terminal groups. In one embodiment, the one or more chain extenders comprise or consist of an epoxy-based chain extender, optionally wherein the one or more chain extenders comprise or consist of a Joncryl chain extender. In one embodiment, the one or more chain extenders comprise or consist of a phosphate/phosphite-based chain extender, optionally wherein the one or more chain extenders comprise or consist of triphenylphosphite (TPP) or tris(nonylphenyl)phosphite (TNPP). In one embodiment, the one or more chain extenders comprise or consist of a carbodiimide-based chain extender, optionally wherein the one or more chain extenders comprise or consist of polycarbodiimide (PCDI). In one embodiment, the one or more chain extenders comprise or consist of an anhydride-based chain extender, optionally wherein the one or more chain extenders comprise or consist of pyromellitic dianhydride (PMDA).

The PHA may undergo compatibilization to improve the bond strength between the PHA layers and the PGA layer. The PHA may be modified with any suitable compatibilizer. Suitably, the one or more compatibilizers comprise or consist of one or more reactive compatibilizers. In one embodiment, the one or more compatibilizers comprise or consist of epoxy-based compatibilizers, acrylic-based compatibilizers, or maleic anhydride-based compatibilizers, optionally wherein the one or more compatibilizers comprise or consist of epoxy-based compatibilizers. In one embodiment, the one or more compatibilizers comprise or consist of a terpolymer of ethylene, acrylic ester and glycidyl methacrylate (EMA-GMA), maleic anhydride (MAH), epoxidized soy-bean oil (ESO), epoxidized-acrylated soybean oil (AESO), and/or maleinized soybean oil (MSO)

Any suitable PGA may be used in the present invention. Suitably, the PGA has a molecular mass of from about 20 kDa to about 500 kDa. Suitably, the PGA has a melting point of 200°C or higher, 210°C or higher, 220°C or higher, or 230°C or higher.

The biopolymer film may comprise any other suitable layers. In one embodiment, the biopolymer film further comprises one or more tie layers. In one embodiment, the biopolymer film comprises a layered structure comprising PHA layer - tie layer - PGA layer - tie layer - PHA layer. Suitably, the tie layers comprise or consist of an adhesive resin and/or a compatibilizer. In one embodiment, the tie layers comprise or consist of a biodegradable adhesive resin, optionally wherein the tie layers comprise or consist of BTR8002P. In one embodiment, the biopolymer film further comprises one or more regrind layers. In one embodiment, the biopolymer film comprises a layered structure comprising PHA layer - regrind layer - tie layer - PGA layer - tie layer - regrind layer - PHA layer. Suitably, the regrind layers comprise a blend of PHA and PGA. In one embodiment, the regrind layers comprise or consist of a regenerate formed by solid state polymerization (SSP) and/or chain extension.

The biopolymer film and each of the layers comprising the same may have any suitable thickness. Suitably, each PHA layer has a thickness of from about 0.001 mm to about 0.50 mm, from about 0.002 mm to about 0.10 mm, or from about 0.003 mm to about 0.05 mm. Suitably, the PGA layer has a thickness of from about 0.001 mm to about 0.50 mm, from about 0.002 mm to about 0.10 mm, or from about 0.003 mm to about 0.05 mm. Suitably, the biopolymer film has a total thickness of from about 0.15 mm to about 0.70 mm, from about 0.16 mm to about 0.60 mm, or from about 0.17 mm to about 0.50 mm.

The biopolymer film may be formed by any suitable method. Suitably, the biopolymer film is formed by co-extrusion or co-injection. In one embodiment, the biopolymer film is formed by co-extrusion. In one embodiment, the biopolymer film is formed by co-injection.

The biopolymer film may have advantageous properties. The biopolymer film may be an oxygen barrier. The biopolymer film may have an oxygen transmission rate of about 1 cm³/m²/day/atm or less at 23°C/50%RH. The biopolymer film may be a moisture barrier. The biopolymer film may have a water vapour transmission rate of about 1 g/m²/day or less at 23°C/85% RH. The biopolymer film may be thermoformable. The biopolymer film may have a melt flow index (MFI) of from 0.5 g/10min to 25 g/10min, from 5 g/10min to 25 g/10min, from 10 g/10min to 25 g/10min, from 15 g/10min to 25 g/10min, or from 15 g/10min to 20 g/10min, optionally wherein the MFI is determined at 190°C or lower with a test load of 2.16 kg or 5 kg.

In another aspect, the present invention provides a method of manufacturing the biopolymer film of the present invention, comprising forming the biopolymer film of the present invention by co-extrusion or co-injection.

In another aspect, the present invention provides a composite material comprising the biopolymer film of the present invention and a paper-based layer.

In another aspect, the present invention provides a capsule for preparation of a beverage upon injection of liquid under pressure into the capsule, wherein the capsule body comprises or consists of the biopolymer film of the present invention.

The capsule body may be cup-shaped. The capsule body may comprise a bottom wall, a lateral wall and an annular flange for a cover to seal thereon. The bottom wall may be suitable for being pierced by a piercing member of a beverage preparation device. In one embodiment, the capsule further comprises a cover for closing the capsule body. In one embodiment, the capsule contains a substance for preparation of a beverage, optionally wherein the substance for preparation of a beverage is roast and ground coffee, a soluble ingredient, or a mix of soluble ingredients. In one embodiment, the substance for preparation of a beverage is roast and ground coffee.

In one embodiment, the capsule body further comprises a paper-based layer. In one embodiment, the paper-based layer forms the exterior surface of the capsule body. In one embodiment, the paper-based layer forms the interior surface of the capsule body. The biopolymer film may be attached to the paper-based layer by any suitable method.

The capsule of the present invention may have advantageous properties. The capsule of the present invention may be compostable. The capsule of the present invention may be single-use. The capsule of the present invention may have a shelf-life of at least 6 months, at least 9 months, or at least 12 months.

In another aspect, the present invention provides use of a biopolymer film of the present invention for manufacturing a beverage capsule.

In another aspect, the present invention provides a method of manufacturing a capsule body for a beverage capsule, comprising moulding a biopolymer film of the present invention to form at least one layer of a multi-layer capsule body.

In another aspect, the present invention provides a method of manufacturing a beverage capsule, the method comprising: (a) providing a paper-based capsule body; and (b) attaching a biopolymer film of the present invention to the capsule body.

In another aspect, the present invention provides a method of manufacturing a beverage capsule, the method comprising: (a) providing a paper-based layer; (b) attaching a biopolymer film of the present invention to the paper-based layer to provide a multi-layer structure comprising a paper-based layer and a biopolymer layer; and (c) forming the multi-layer structure to provide a capsule body.

In another aspect, the present invention provides a beverage capsule obtained or obtainable by a method of manufacture of the present invention. The capsule may be any described herein.

In another aspect, the present invention provides use of a capsule of the present invention to prepare a beverage.

In another aspect, the present invention provides a method of preparing a beverage, the method comprising injecting pressurized liquid into a capsule according to the present invention and allowing a beverage to flow out of the capsule.

### Brief description of the drawings

Additional features and advantages of the present invention are described in, and will be apparent from, the description of the presently preferred embodiments which are set out below with reference to the drawings in which:
Figure 1 shows schematic cut views of multilayer biopolymer films according to embodiments of the present invention. (A) shows an embodiment having the layered structure: PHA layer - PGA layer - PHA layer. (B) shows an embodiment having the layered structure: PHA layer - tie layer - PGA layer - tie layer - PHA layer. **(C)** shows an embodiment having the layered structure: PHA layer - regrind layer - tie layer - PGA layer-tie layer - regrind layer - PHA layer.
Figure 2 is a schematic cut view of a capsule according to one embodiment of the present invention.

### Detailed description of the invention

Various preferred features and embodiments of the present invention will now be described by way of non-limiting examples. The skilled person will understand that they can combine all features of the invention disclosed herein without departing from the scope of the invention as disclosed.

It must be noted that as used herein and in the appended claims, the singular forms "a", "an", and "the" include plural referents unless the context clearly dictates otherwise. The terms "comprising", "comprises" and "comprised of" as used herein are synonymous with "including", "includes", "containing", or "contains", and are inclusive or open-ended and do not exclude additional, non-recited members, elements or steps. The terms "comprising", "comprises" and "comprised of" also include the term "consisting of".

Numeric ranges are inclusive of the numbers defining the range. As used herein the term "about" means approximately, in the region of, roughly, or around. When the term "about" is used in conjunction with a numerical value or range, it modifies that value or range by extending the boundaries above and below the numerical value(s) set forth. In general, the terms "about" and "approximately" are used herein to modify a numerical value(s) above and below the stated value(s) by 10%.

All publications mentioned in the specification are herein incorporated by reference. The publications discussed herein are provided solely for their disclosure prior to the filing date of the present application. Nothing herein is to be construed as an admission that such publications constitute prior art to the claims appended hereto.

### Multi-layer biopolymer films

The present invention provides a biopolymer film comprising polyhydroxyalkanoate (PHA) and polyglycolide (PGA).

As used herein, a "biopolymer film" may refer to a film, coating, or resin, substantially consisting of or consisting of one or more biopolymers. Typically, a biopolymer film is in the form of a thin continuous material having a thickness of up to about 1.0 mm. A biopolymer film is usually formed by melting the biopolymer and then extruding or casting the biopolymer. In preferred embodiments, the biopolymer film is compostable.

As used herein, a "biopolymer" or "bio-based polymer" may refer to a natural polymer that may be chemically synthesised from biological material or biosynthesized by living organisms. The biopolymers may be unmodified or modified. For example, a biopolymer may be functionalised or chemically modified with one or more chain extenders and/or one or more compatibilizers. In preferred embodiments, a biopolymer is biosynthesized by living organisms. In preferred embodiments, a biopolymer is an aliphatic biopolyester.

### Multi-layer films

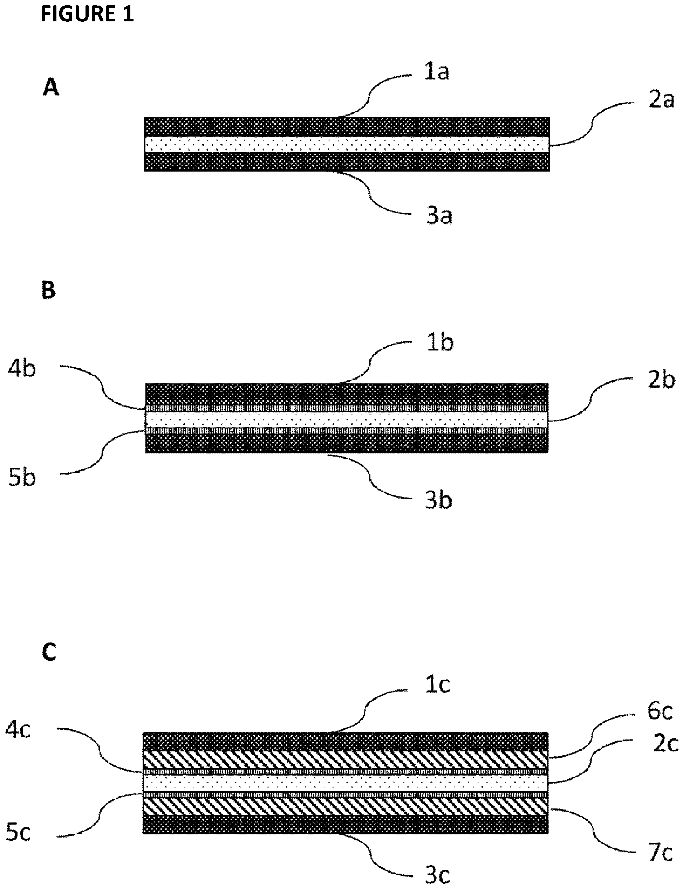

As used herein, a "multi-layer biopolymer film" may refer to a biopolymer film comprising two or more layers. Each layer may comprise, substantially consist of, or consist of one or more biopolymers. Example multilayer biopolymer films according to embodiments of the present invention are shown in **figures 1A-C**.

In one embodiment, the biopolymer film comprises or consists of one or more PHA layer and one or more PGA layer. In one embodiment, the biopolymer film has a layered structure comprising PHA layer - PGA layer- PHA layer. By sandwiching the PGA between two layers of PHA, the PGA is protected from hydrolysis and provides excellent long-term moisture and oxygen barrier properties. The biopolymer film may further comprise any suitable layers between the biopolymer and PGA layers and/or outside the biopolymer and PGA layers. For example, the biopolymer film may further comprise one or more tie layer and/or one or more regrind layer between the biopolymer and PGA layers.

In one embodiment, the biopolymer film has a layered structure comprising or consisting of PHA layer - PGA layer - PHA layer. Such an embodiment is shown in **figure 1A**, in which the biopolymer film comprises or consists of PHA layer 1a, PGA layer 2a, and PHA layer 3a.

In one embodiment, the biopolymer film has a layered structure comprising or consisting of PHA layer - tie layer - PGA layer - tie layer - PHA layer. Such an embodiment is shown in **figure 1B**, in which the biopolymer film comprises or consists of PHA layer 1b, tie layer 4b, PGA layer 2b, tie layer 5b, and PHA layer 3b.

In one embodiment, the biopolymer film has a layered structure comprising or consisting of PHA layer - regrind layer - tie layer - PGA layer - tie layer - regrind layer - PHA layer. Such an embodiment is shown in **figure 1C**, in which the biopolymer film comprises or consists of PHA layer 1c, regrind layer 6c, tie layer 4c, PGA layer 2c, tie layer 5c, regrind layer 7c, and PHA layer 3c.

The biopolymer film and each of the layers therein may have any suitable thickness. For example, any thickness such that the biopolymer film may be used in a beverage capsule as a moisture barrier and a water barrier.

Suitably, the biopolymer film has a total thickness of about 0.10 mm or more, about 0.11 mm or more, about 0.12 mm or more, about 0.13 mm or more, about 0.14 mm or more, about 0.15 mm or more, about 0.16 mm or more, or about 0.17 mm or more. Suitably, the biopolymer film has a total thickness of about 1.00 mm or less, about 0.90 mm or less, about 0.80 mm or less, about 0.75 mm or less, about 0.70 mm or less, about 0.65 mm or less, about 0.60 mm or less, about 0.55 mm or less, or about 0.50 mm or less. Suitably, the biopolymer film has a total thickness of from about 0.10 mm to about 1.00 mm, from about 0.15 mm to about 0.70 mm, from about 0.16 mm to about 0.60 mm, or from about 0.17 mm to about 0.50 mm.

Suitably, each PHA layer has a thickness of about 0.001 mm or more, about 0.002 mm or more, about 0.003 mm or more, about 0.004 mm or more, about 0.005 mm or more, about 0.006 mm or more, about 0.007 mm or more, about 0.008 mm or more, about 0.009 mm or more, or about 0.01 mm or more. Suitably, each PHA layer has a thickness of about 0.50 mm or less, about 0.40 mm or less, about 0.30 mm or less, about 0.20 mm or less, about 0.10 mm or less, or about 0.05 mm or less. Suitably, each PHA layer has a thickness of from about 0.001 mm to about 0.50 mm, from about 0.002 mm to about 0.10 mm, or from about 0.003 mm to about 0.05 mm.

Suitably, each PGA layer has a thickness of about 0.001 mm or more, about 0.002 mm or more, about 0.003 mm or more, about 0.004 mm or more, about 0.005 mm or more, about 0.006 mm or more, about 0.007 mm or more, about 0.008 mm or more, about 0.009 mm or more, or about 0.01 mm or more. Suitably, each PGA layer has a thickness of about 0.50 mm or less, about 0.40 mm or less, about 0.30 mm or less, about 0.20 mm or less, about 0.10 mm or less, or about 0.05 mm or less. Suitably, each PGA layer has a thickness of from about 0.001 mm to about 0.50 mm, from about 0.002 mm to about 0.10 mm, or from about 0.003 mm to about 0.05 mm.

Suitably, a tie layer has a thickness of about 0.002 mm or more, about 0.003 mm or more, about 0.004 mm or more, about 0.005 mm or more, about 0.006 mm or more, about 0.007 mm or more, about 0.008 mm or more, about 0.009 mm or more, or about 0.010 mm or more. Suitably, a tie layer has a thickness of about 0.030 mm or less, about 0.025 mm or less, about 0.020 mm or less, about 0.015 mm or less, or about 0.010 mm or less. Suitably, a tie layer has a thickness of from about 0.002 mm to about 0.030 mm.

Suitably, a re-grind layer may have a thickness of up to about half the thickness of each PHA layer. Suitably, a re-grind layer has a thickness of about 0.010 mm or more. Suitably, a re-grind layer has a thickness of about 0.025 mm or less. Suitably, a re-grind layer has a thickness of from about 0.010 mm to about 0.025 mm.

### Biopolymer film production

The biopolymer film may be formed by any suitable method. Suitable methods may include co-extrusion, co-injection, lamination, coating, layer-by-layer assembly, electrospinning etc. (see e.g. Anukiruthika, T., et al., 2020. Comprehensive Reviews in Food Science and Food Safety, 19(3), pp.1156-1186).

In one embodiment, the biopolymer film is formed by co-extrusion. Typically, a co-extrusion process involves two or more polymeric materials, usually in the form of granules or pellets, being melted separately and then combined together and extruded as a single film with multiple layers. Common co-extrusion methods may include cast extrusion/flat die extrusion, blow extrusion, and sheet extrusion. In one embodiment, the biopolymer film is formed by co-extrusion on a substrate (e.g. paper). In one embodiment, the biopolymer film is formed by co-extrusion and subsequently thermoformed (e.g. directly into a capsule body or into a paper-based capsule body).

In one embodiment, the biopolymer film is formed by co-injection. Co-injection is a polymer injection technology in which different polymers are injected into the same mould. Typically, a co-injection process may involve injection of layers of flowing material through a nozzle assembly into a mould. The result is a multilayer film having layers. In one embodiment, the biopolymer film is formed by annular co-injection.

In one embodiment, the biopolymer film is formed by lamination. Laminates can be manufactured by many methods, such as extrusion lamination, adhesive lamination, wax, and hot melt lamination. In one embodiment, the biopolymer film is formed by coating. Coating techniques may include solvent-based coating, extrusion coating, aqueous dispersion, hot melt coating, and vacuum coating. In one embodiment, the biopolymer film is formed by layer-by-layer assembly or by electrospinning.

### Biopolymer film properties

The biopolymer film of the present invention may be used to manufacture a beverage capsule. The biopolymer film may be used as the sole material forming the body of a beverage capsule or in combination with one or more other layers (e.g. a paper-based layer). The biopolymer film may be an oxygen barrier, a moisture barrier, and/or thermoformable. In preferred embodiments, the biopolymer film is an oxygen barrier, a moisture barrier and thermoformable.

The biopolymer film may be an oxygen barrier. Any suitable method may be used to determine whether the biopolymer film is an oxygen barrier. Suitably, the biopolymer film has an oxygen transmission rate of about 1 cm³/m²/day/atm or less, about 0.5 cm³/m²/day/atm or less, about 0.4 cm³/m²/day/atm or less, about 0.3 cm³/m²/day/atm or less, about 0.2 cm³/m²/day/atm or less, or about 0.1 cm³/m²/day/atm or less. The oxygen transmission rate may be determined at 23°C/50% RH. In one embodiment, the oxygen transmission rate is determined according to ASTM D3985.

The biopolymer film may be a moisture barrier. Any suitable method may be used to determine whether the biopolymer film is a moisture barrier. Suitably, the biopolymer film has a water vapour transmission rate of about 10 g/m²/day or less, about 5 g/m²/day or less, about 4 g/m²/day or less, about 3 g/m²/day or less, about 2 g/m²/day or less, about 1 g/m²/day or less, about 0.5 g/m²/day or less, about 0.4 g/m²/day or less, about 0.3 g/m²/day or less, about 0.2 g/m²/day or less, or about 0.1 g/m²/day or less. The water vapour transmission rate may be determined at 23°C/85% RH. In one embodiment, the water vapour transmission rate is determined by ASTM E96. In one embodiment, the water vapour transmission rate is determined by ASTM F1249.

The biopolymer film may be thermoformable. A thermoformable film may be formed or shaped using heat and pressure. Any suitable method may be used to determine whether the biopolymer film is thermoformable. Suitably, the biopolymer film has a melt flow index (MFI) of from about 0.5 g/10min to about 25 g/10min, from about 0.5 g/10min to about 20 g/10min, from about 0.5 g/10min to about 15 g/10min, from about 0.5 g/10min to about 10 g/10min, or from about 0.5 g/10min to about 5 g/10min. Suitably, the biopolymer film has a melt flow index (MFI) of from about 0.5 g/10min to about 25 g/10min, from about 1 g/10min to about 25 g/10min, from about 2 g/10min to about 25 g/10min, from about 3 g/10min to about 25 g/10min, from about 4 g/10min to about 25 g/10min, from about 5 g/10min to about 25 g/10min, from about 10 g/10min to about 25 g/10min, from about 15 g/10min to about 25 g/10min, or from about 15 g/10min to about 20 g/10min.

Suitable test load values for determining MFI are well known of the skilled person who can choose appropriately, for example depending on the type of polymer that is being tested. The MFI may be determined at 190°C or lower with a test load of 2.16 kg or 5 kg. In one embodiment, the MFI is determined at 190°C or lower with a test load of 2.16 kg. In one embodiment, the MFI is determined at 190°C or lower with a test load of 5 kg. In one embodiment, the MFI is determined by ASTM D1238.

The biopolymer film may be resistant to lamination. A multi-layer film that is resistant to lamination may have strong adhesion between layers. Any suitable method may be used to determine the bond strength between layers. Suitably, the layers have a bond strength of at least about 0.5 N/25 mm, at least about 1 N/25 mm, at least about 2 N/25 mm, at least about 3 N/25 mm, at least about 4 N/25 mm, or at least about 5 N/25 mm. In one embodiment, the bond strength is determined by ASTM F904.

### Polyhydroxyalkanoates (PHA) layers

Polyhydroxyalkanoates (PHAs) comprise a group of natural biodegradable polyesters that are synthesized by microorganisms and may have the following general chemical structure where, typically x=1-8 and n=100 to 1000s (see Li, Z., et al., 2016. NPG Asia Materials, 8(4), pp.e265-e265):

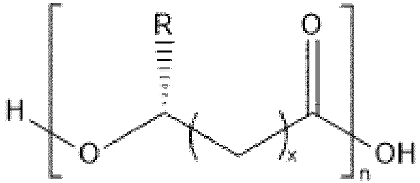

More than 150 different PHA monomers have been identified, which renders them the largest group of natural polyester. Commonly synthesized PHA monomers include: 3-hydroxybutyrate, 3-hydroxyvalerate, 3-hydroxyhexanoate, 3-hydroxyoctanoate, 3-hydroxydecanoate, 3-hydroxydodecanoate and 3-hydroxyundecenoate. Exemplary PHAs include poly(3-hydroxybutyrate) (PHB), poly(3-hydroxyvalerate) (PHV), poly(3-hydroxybutyrate-co-3-hydroxyvalerate) (PHBV), poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxyundecenoate) (PHU), and poly(3-hydroxyoctanoate-co-undecenoate) (PHOU).

In one embodiment, the PHA is selected from poly(3-hydroxybutyrate) (PHB), poly(3-hydroxyvalerate) (PHV), poly(3-hydroxybutyrate-co-3-hydroxyvalerate) (PHBV), poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxyundecenoate) (PHU), poly(3-hydroxyoctanoate-co-undecenoate) (PHOU), and any copolymer and/or blend thereof.

PHAs may be classified based on the chain length of the 3-hydroxyalkanoate repeat units. In one embodiment, the PHA is selected from short-chain length PHAs, medium-chain length PHAs and long-chain length PHAs. In one embodiment, the PHA is selected from medium-chain length PHAs and long-chain length PHAs. In one embodiment, the PHA is selected from medium-chain length PHAs. As used herein, a "short-chain length PHA" may comprise or consist of 3-hydroxyalkanoate repeat units having from 4 to 5 carbon atoms. As used herein, a "medium-chain length PHA" may comprise or consist of 3-hydroxyalkanoate repeat units having from 6 to 14 carbon atoms. As used herein, a "long-chain length PHA" may comprise or consist of 3-hydroxyalkanoate repeat units having greater than 14 carbon atoms.

In one embodiment, the PHA is selected from poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxy undecenoate) (PHU), poly(3-hydroxy octanoate-co-undecenoate) (PHOU), and any copolymer and/or blend thereof. In one embodiment, the PHA is selected from poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxy undecenoate) (PHU), and poly(3-hydroxy octanoate-co-undecenoate) (PHOU).

Suitably, the PHA has a molecular mass of about 20 kDa or more, about 30 kDa or more, about 40 kDa or more, or about 50 kDa or more. Suitably, the PHA has a molecular mass of about 1000 kDa or less, about 500 kDa or less, about 400 kDa or less, or about 300 kDa or less. Suitably, the PHA has a molecular mass of from about 20 kDa to about 1000 kDa, from about 30 kDa to about 500 kDa, from about 40 kDa to about 400 kDa, or from about 50 kDa to about 300 kDa. In one embodiment, the PHA has a molecular mass of from about 50 kDa to about 300 kDa.

Suitably, the PHA has a melting point of about 200°C or less, about 190°C or less, about 180°C or less, about 170°C or less, about 160°C or less, or about 150°C or less. Suitably, the PHA has a melting point of about 100°C or more, about 110°C or more, about 120°C or more, about 130°C or more, or about 140°C or more. Suitably, the PHA has a melting point of from about 100°C to about 200°C, from about 110°C to about 190°C, or from about 120°C to about 180°C.

The polyhydroxyalkanoate (PHA) may be functionalised and/or chemically modified, for example with one or more chain extenders and/or one or more compatibilizers. In preferred embodiments, the PHA is functionalised. In other preferred embodiments, the PHA is chemically modified with one or more chain extenders and/or one or more compatibilizers. In more preferred embodiments, the PHA is functionalised and chemically modified with one or more chain extenders and/or one or more compatibilizers.

In one embodiment, the PHA is functionalised and/or chemically modified by reactive extrusion. Reactive extrusion may refer to a method that combines the chemical processes (e.g. polymer synthesis and/or modification) and extrusion into a single process.

### Functionalisation

In one embodiment, the PHA is functionalised. As used herein, "functionalisation" may refer to the addition of one or more functional group to the polymeric macromere. For example, functional groups which may be added include carboxylic functional groups, hydroxyl functional groups, or epoxide functional groups. Functional groups may be added by carboxylation, hydroxylation, epoxidation, or by grafting. Suitable reaction conditions will be known to the skilled person (see e.g. Gumel, A.M., et al., 2014. Polyhydroxyalkanoate (PHA) based blends, composites and nanocomposites, chapter 7, pp.141-182).

The PHA may be functionalised by any suitable method. For example, the PHA may be functionalised by a method selected from carboxylation, hydroxylation, epoxidation, and grafting. The PHA may be functionalised by any suitable combination of methods. For example, the PHA may be functionalised by two or more methods selected from carboxylation, hydroxylation, epoxidation, and grafting.

In one embodiment, the PHA is functionalised by carboxylation. In one embodiment, the PHA has carboxylic functional groups. Typically, an oxidative process is employed to carboxylate PHA with an unsaturated group. For example, the PHA may be carboxylated using an oxidation agent in the presence of sodium bicarbonate or a crown ether.

In one embodiment, the PHA is functionalised by hydroxylation. In one embodiment, the PHA has hydroxyl functional groups. Typically, acid- or base-catalyzed reactions are used in the modification of PHA by hydroxylation in the presence of low molecular weight mono- or diol compounds.

In one embodiment, the PHA is functionalised by epoxidation. In one embodiment, the PHA has epoxide functional groups. Epoxidation may be carried out, for example, using m-chloroperoxybenzoic acid.

In one embodiment, the PHA is functionalised by grafting. In one embodiment, the PHA is a graft copolymer. Grafting reactions can be induced by either chemical, radiation or plasma discharge methods. Grafting methods include "grafting to", "grafting from", and "grafting through" method. The "grafting through" approach is typically the simples process and involves copolymerising the PHA macromere with low molecular weight monomer by atom transfer radical polymerisation.

### Chain extenders

In one embodiment, the PHA is chemically modified with one or more chain extenders. In one embodiment, the PHA is functionalised and chemically modified with one or more chain extenders.

As used herein, a "chain extender" may refer to reagent which can link together two or more polymers or polymer chains. Typically, a chain extender is a low molecular weight molecule which reacts with the ends of polymers or polymer chains. Chain extenders may be bi-functional, i.e. have two functional groups which can link together two polymers or polymer chains, or poly-functional/multi-functional, i.e. having more than two functional groups which can link together more than two polymers or polymer chains. Suitable chain extenders will be well known to the skilled person.

In preferred embodiments, the one or more chain extenders are multi-functional chain extenders. By chemically modifying the PHA with multi-functional chain extenders a branched polymeric structure may be formed, thereby improving compatibility and/or processability of the PHA. In some embodiments, the one or more chain extenders have two or more functional groups, the one or more chain extenders have three or more functional groups, four or more functional groups, or five or more functional groups. In some embodiments, the one or more chain extenders can link together two or more polymers or polymer chains, three or more polymers or polymer chains, four or more polymers or polymer chains, or five or more polymers or polymer chains.

Chain extenders can employ a variety of reaction mechanisms and generally fall into two categories: addition-type chain extenders and activating-type chain extenders. Addition-type chain extenders consist of at least two electrophilic sites and can form a permanent bridge between at least two polymers or polymer chains. Activating-type chain extenders are composed of an electrophilic site connected to suitably labile substituents and act as intermediate for a substitution reaction linking the ends of two polymers or polymer chains. In preferred embodiments, the one or more chain extenders are addition-type chain extenders.

The functional groups of addition-type chain extenders are typically carbon electrophiles, such as epoxides, isocyanates and anhydrides, or are based on heterocyclic molecules such as phenylene bisoxazolin. Suitably, the one or more chain extenders are addition-type chain extenders that react with carboxyl and/or hydroxyl terminal groups. In one embodiment, the one or more chain extenders comprise or consist of one or more addition-type chain extenders that react with carboxyl terminal groups. In one embodiment, the one or more chain extenders consist of one or more addition-type chain extenders that react with carboxyl terminal groups. In one embodiment, the one or more chain extenders comprise or consist of one or more addition-type chain extenders that react with hydroxyl terminal groups. In one embodiment, the one or more chain extenders consist of one or more addition-type chain extenders that react with hydroxyl terminal groups. In one embodiment, the one or more chain extenders comprise or consist of one or more addition-type chain extenders that react with carboxyl terminal groups and hydroxyl terminal groups. In one embodiment, the one or more chain extenders consist of one or more addition-type chain extenders that react with carboxyl terminal groups and hydroxyl terminal groups.

Any suitable chain extender may be used, for example any epoxy-based chain extender, phosphate/phosphite-based chain extender, carbodiimide based chain extender, or an anhydride-based chain extender. Suitable chain extenders are known in the art (see e.g. Standau, T., et al., 2019. Polymers, 11(2), p.306).

In one embodiment, the one or more chain extenders comprise or consist of (multi-functional) epoxy-based chain extenders. In one embodiment, the one or more chain extenders consist of (multi-functional) epoxy-based chain extenders. Epoxy-based chain extenders may react with both with carboxyl and hydroxyl end groups. A particularly preferred epoxy-based chain extender is the Joncryl^{®} ADR series, including Joncryl^{®} ADR 4368, Joncryl^{®} ADR 4468, Joncryl^{®} ADR 4300, and Joncryl^{®} ADR 4380 (see e.g. Frenz, V., et al., 2008. In Tech. Pap. Reg. Tech. Conf. Soc. Plast. Eng., Vol. 3, pp. 1678-1682). In one embodiment, the epoxy-based chain extender is Joncryl^{®} ADR 4368. Joncryl^{®} ADR may have the following chemical structure (see Al-Itry, R., et al., 2012. Polymer Degradation and Stability, 97(10), pp.1898-1914): 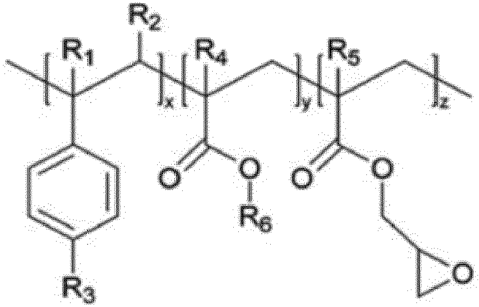 wherein R₁-R₅ are each independently selected from hydrogen, methyl, and alkyl groups, wherein R₆ is an alkyl group, and wherein x, y and z are independently from 1 to 20. Suitably, z is ≥ 2, ≥ 3, ≥ 4, or > 5.

In one embodiment, the one or more chain extenders comprise or consist of (multi-functional) phosphate/phosphite-based chain extenders. In one embodiment, the one or more chain extenders consist of (multi-functional) phosphate/phosphite-based chain extenders. Phosphate/phosphite-based chain extenders may react with both carboxyl and hydroxyl end-groups. Examples of suitable phosphate/phosphite-based chain extenders include triphenylphosphite (TPP) or tris(nonyl-phenyl)phosphite (TNPP). In one embodiment, the phosphate/phosphite-based chain extender is triphenylphosphite (TPP). In one embodiment, the phosphate/phosphite-based chain extender is tris(nonyl-phenyl)phosphite (TNPP).

In one embodiment, the one or more chain extenders comprise or consist of (multi-functional) carbodiimide-based chain extenders. In one embodiment, the one or more chain extenders consist of (multi-functional) carbodiimide-based chain extenders. Carbodiimide-based chain extenders may react with hydroxyl end-groups. Examples of suitable carbodiimide-based chain extenders include polycarbodiimide (PCDI).

In one embodiment, the one or more chain extenders comprise or consist of (multi-functional) isocyanate-based chain extenders. In one embodiment, the one or more chain extenders consist of (multi-functional) isocyanate-based chain extenders. Isocyanate-based chain extenders may react with hydroxyl end-groups. Examples of suitable carbodiimide-based chain extenders include triisocyanate.

In one embodiment, the one or more chain extenders comprise or consist of (multi-functional) anhydride-based chain extenders. one embodiment, the one or more chain extenders consist of (multi-functional) anhydride-based chain extenders. Anhydride-based chain extenders may react with hydroxyl end-groups. Examples of suitable anhydride-based chain extenders include pyromellitic dianhydride (PMDA).

### Compatibilizers

In one embodiment, the PHA is chemically modified with one or more compatibilizers. In one embodiment, the PHA is functionalised and chemically modified with one or more compatibilizers.

As used herein, a "compatibilizer" may refer to substance which can be added to an immiscible blend of polymers that will increase their stability. A compatibilizer may enhance the stability of the interface between two polymers by creating interactions between the two polymers. Polymer blends may be compatibilized by reactive or non-reactive strategies. In reactive compatibilization, polymers with reactive functional groups (e.g. anhydride, epoxy, isocyanates, etc.) react with other functional groups of the blended polymers to form graft and/or block copolymers which can act as compatibilizers. In non-reactive compatibilization, pre-made copolymers are used to improve the compatibility between the blended components.

In one embodiment, the one or more compatibilizers comprise or consist of reactive compatibilizers. In one embodiment, the one or more compatibilizers consist of reactive compatibilizers. In one embodiment, the PHA is chemically modified with one or more reactive compatibilizers. As used herein, a "reactive compatibilizers" may refer to a compatibilizer suitable for reactive compatibilization. Examples may include epoxy-based compatibilizers, acrylic-based compatibilizers, and maleic anhydride-based compatibilizers. Other compatibilizers with functionalities like isocyanates, silane, and oxazoline could also be used (see e.g. Muthuraj, R., et al., 2018. Journal of Applied Polymer Science, 135(24), p.45726).

In one embodiment, the one or more compatibilizers comprise or consist of epoxy-based compatibilizers. In one embodiment, the one or more compatibilizers consist of epoxy-based compatibilizers. In one embodiment, the PHA is chemically modified with one or more epoxy-based compatibilizers. During melt blending, an epoxy functionalised polymer can react with carboxyl and hydroxyl functional groups to form PHA/PGA copolymers.

In one embodiment, the one or more compatibilizers comprise or consist of acrylic-based compatibilizers. In one embodiment, the one or more compatibilizers consist of acrylic-based compatibilizers. In one embodiment, the PHA is chemically modified with one or more acrylic-based compatibilizers. During melt blending, an acrylate functionalised polymer can react with hydroxyl functional groups to form PHA/PGA copolymers.

In one embodiment, the one or more compatibilizers comprise or consist of maleic anhydride-based compatibilizers. In one embodiment, the one or more compatibilizers consist of maleic anhydride-based compatibilizers. In one embodiment, the PHA is chemically modified with one or more maleic anhydride-based compatibilizers. During melt blending, grafted maleic anhydride groups can react with hydroxyl functional groups to form PHA/PGA copolymers.

In one embodiment, the one or more compatibilizers comprise or consist of a terpolymer of ethylene, acrylic ester and glycidyl methacrylate (EMA-GMA), maleic anhydride (MAH), epoxidized soy-bean oil (ESO), epoxidized-acrylated soybean oil (AESO), and/or maleinized soybean oil (MSO). In one embodiment, the one or more compatibilizers consist of a terpolymer of ethylene, acrylic ester and glycidyl methacrylate (EMA-GMA), maleic anhydride (MAH), epoxidized soy-bean oil (ESO), epoxidized-acrylated soybean oil (AESO), and/or maleinized soybean oil (MSO).

In one embodiment, the one or more compatibilizers comprise or consist of a terpolymer of ethylene, acrylic ester and glycidyl methacrylate (EMA-GMA). In one embodiment, the one or more compatibilizers consist of a terpolymer of ethylene, acrylic ester and glycidyl methacrylate (EMA-GMA) (see e.g. Ellingford, C., et al., 2022. Journal of Applied Polymer Science, 139(6), p.51617).

In one embodiment, the one or more compatibilizers comprise or consist of maleic anhydride (MAH). In one embodiment, the one or more compatibilizers consist of maleic anhydride (MAH).

In one embodiment, the one or more compatibilizers comprise or consist of epoxidized soybean oil (ESO), epoxidized-acrylated soybean oil (AESO), and/or maleinized soybean oil (MSO). In one embodiment, the one or more compatibilizers consist of epoxidized soy-bean oil (ESO), epoxidized-acrylated soybean oil (AESO), and/or maleinized soybean oil (MSO) (see e.g. Garcia-Campo, M.J., et al., 2017. Materials, 10(11), p.1339).

### Polyglycolide (PGA) layers

Polyglycolide or polyglycolic acid (PGA) is a biodegradable aliphatic polyester and may have the following general chemical structure:

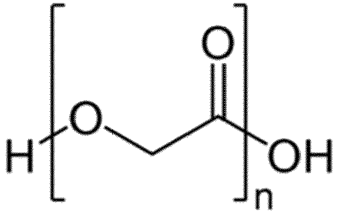

PGA can be obtained by a number of processes starting with different reactants. Low molecular weight PGA can be obtained by polycondensation of glycolic acid. A number of process and technologies have been developed for synthesis of high molecular weight PGA. For example, high molecular weight PGA can be obtained through the ring-opening polymerization of glycolide, the cyclic di-ester of glycolic acid (see e.g. Singh, V. and Tiwari, M., 2010. International Journal of Polymer Science, p.652719).

Suitably, the PGA has a molecular mass of at least about 10 kDa, at least about 15 kDa, at least about 20 kDa, at least about 30 kDa, at least about 40 kDa, at least about 50 kDa, at least about 60 kDa, or at least about 70 kDa. Suitably, the PGA has a molecular mass of about 1000 kDa or less, about 750 kDa or less, or about 500 kDa or less. Suitably, the PGA has a molecular mass of from about 10 kDa to about 1000 kDa, from about 15 kDa to about 750 kDa, from about 20 kDa to about 500 kDa, from about 30 kDa to about 500 kDa, from about 40 kDa to about 500 kDa, from about 50 kDa to about 500 kDa, from about 60 kDa to about 500 kDa, or from about 70 kDa to about 500 kDa.

Suitably, the PGA has a melting point of about 200°C or higher, about 210°C or higher, about 220°C or higher, or about 230°C or higher. Suitably, the PGA has a melting point of about 250°C or lower, about 240°C or lower, about 230°C or lower, about 220°C or lower, about 219°C or lower, about 218°C or lower, about 217°C or lower, about 216°C or lower, about 215°C or lower, about 214°C or lower, about 213°C or lower, about 212°C or lower, about 211°C or lower, or about 210°C or lower. Suitably, the PGA has a melting point of from about 200°C to about 250°C, from about 200°C to about 240°C, from about 200°C to about 230°C, from about 200°C to about 220°C, from about 200°C to about 219°C, from about 200°C to about 218°C, from about 200°C to about 217°C, from about 200°C to about 216°C, from about 200°C to about 215°C, from about 200°C to about 214°C, from about 200°C to about 213°C, from about 200°C to about 212°C, from about 200°C to about 211°C, or from about 200°C to about 210°C.

The PGA may be functionalised and/or chemically modified by any suitable method. In one embodiment, the PGA is chemically modified with one or more compatibilizers. In one embodiment, the PGA is functionalised and chemically modified with one or more compatibilizers. Suitable agents for functionalisation and compatibilization are described herein in the sections entitled "Functionalisation" and "Compatibilizers", respectively.

### PGA blends

The PGA layer may comprise or consist of a PGA blend. As used herein, a "PGA blend" may consist of PGA and one or more other polymers (e.g. biopolymers). Using a PGA blend may improve the toughness and flexibility of the PGA layer, whilst maintaining temperature stability for hot beverage applications.

Suitably, the PGA layer comprises at least about 40 wt% PGA, at least about 45 wt% PGA, at least about 50 wt% PGA, at least about 55 wt% PGA, at least about 60 wt% PGA, at least about 65 wt% PGA, at least about 70 wt% PGA, at least about 75 wt% PGA, at least about 80 wt% PGA, at least about 85 wt% PGA, or at least about 90 wt% PGA. Suitably, the PGA layer comprises about 99 wt% or less PGA, about 98 wt% or less PGA, about 97 wt% or less PGA, about 96 wt% or less PGA, or about 95 wt% or less PGA. Suitably, the PGA layer comprises from about 40 wt% PGA to about 95 wt% PGA, from about 45 wt% PGA to about 95 wt% PGA, from about 50 wt% PGA to about 95 wt% PGA, from about 55 wt% PGA to about 95 wt% PGA, from about 60 wt% PGA to about 95 wt% PGA, from about 65 wt% PGA to about 95 wt% PGA, from about 70 wt% PGA to about 95 wt% PGA, from about 75 wt% PGA to about 95 wt% PGA, from about 80 wt% PGA to about 95 wt% PGA, from about 85 wt% PGA to about 95 wt% PGA, or from about 90 wt% PGA to about 95 wt% PGA.

The PGA layer may comprise PGA blended with poly(butylene adipate-co-terephthalate) (PBAT), polycaprolactone (PCL), polylactic acid (PLA), and/or nanocellulose. In one embodiment, the PGA layer comprises PGA blended with: (a) PBAT, PCL, PLA, or any combination thereof; and (b) nanocellulose. In one embodiment, the PGA layer comprises PGA blended with: (a) PBAT, PCL, or PLA; and (b) nanocellulose. In one embodiment, the PGA layer comprises PGA blended with: (a) PBAT and/or PCL; and (b) nanocellulose. In one embodiment, the PGA layer comprises PGA blended with: (a) PBAT or PCL; and (b) nanocellulose. In one embodiment, the PGA layer comprises or consists of a PGA/PBAT blend. In one embodiment, the PGA layer comprises or consists of a PGA/PCL blend. In one embodiment, the PGA layer comprises or consists of a PGA/PLA blend. In one embodiment, the PGA layer comprises nanocellulose.

The PGA blend may be obtained by any method known in the art. For example, the PGA blend may be obtained by melt blending. Typically, melt blending is a continuous process in which a polymer is run through a blending extruder and additives are introduced to the molten polymer as required. The PGA layer may further comprise one or more compatibilizers, e.g. one or more reactive compatibilizers as described herein in the section entitled "Compatibilizers" and/or one or more block or graft copolymer compatibilizers.

### Other layers

The biopolymer film of the present invention may comprise any other suitable layers, in addition to PHA and PGA layers. For example, the biopolymer film may comprise one or more tie layers and/or one or more re-grind layers. In one embodiment, the biopolymer film comprises one or more tie layers and one or more re-grind layers.

### Tie layers

In one embodiment, the biopolymer film comprises one or more tie layers.

In one embodiment, the biopolymer film comprises a layered structure comprising or consisting of PHA layer - tie layer - PGA layer - PHA layer. In one embodiment, the biopolymer film comprises a layered structure comprising or consisting of PHA layer - tie layer - PGA layer - tie layer - PHA layer.

As used herein, a "tie layer" may refer to a polymer layer designed to provide adhesion between two other polymer layers. For example, tie layers may be sandwiched between polymer layers that do not bond on their own, or which only bond weakly. Typically, tie layers may comprise copolymers of polar and nonpolar repeat units and with or without functional reactive groups. The skilled person is able to select a suitable tie layer resin depending on the polymer layers to be bonded and on the adhesive strength needed. Suitably, a tie layer may comprise or consist of an adhesive resin or a compatibilizer.

In one embodiment, the one or more tie layers comprise or consist of one or more adhesive resins. In one embodiment, the one or more tie layers consist of one or more adhesive resins. Example adhesive resins include ethylene vinyl acetate (EVA), ethylene methyl acrylate (EMA), ethylene acrylic acid (EAA) and ethylene methacrylic acd (EMAA). In one embodiment, the one or more tie layers comprise or consist of one or more biodegradable adhesive resins. In preferred embodiments, the one or more tie layers consist of one or more biodegradable adhesive resins. A particularly preferred biodegradable adhesive resin is BTR8002P, which is an acid-modified polyester resin biodegradable tie layer available from Mitsubishi Chemicals. In one embodiment, the one or more tie layers comprise BTR8002P. In one embodiment, the one or more tie layers consist of BTR8002P.

In one embodiment, the one or more tie layers comprise or consist of one or more compatibilizers. In one embodiment, the one or more tie layers consist of one or more compatibilizers. Suitable compatibilizers for use in the tie layers are described herein in the section entitled "Compatibilizers".

### Re-grind layers

In one embodiment, the biopolymer film comprises one or more regrind layers.

In one embodiment, the biopolymer film comprises a layered structure comprising or consisting of PHA layer - regrind layer- PGA layer- PHA layer. In one embodiment, the biopolymer film comprises a layered structure comprising or consisting of PHA layer - regrind layer - PGA layer - regrind layer - PHA layer. In one embodiment, the biopolymer film comprises a layered structure comprising or consisting of PHA layer - regrind layer - PGA layer - tie layer - PHA layer. In one embodiment, the biopolymer film comprises a layered structure comprising or consisting of PHA layer - regrind layer - tie layer - PGA layer - tie layer - PHA layer. In one embodiment, the biopolymer film comprises a layered structure comprising or consisting of PHA layer - regrind layer - tie layer - PGA layer - tie layer - regrind layer - PHA layer. In other embodiments, the biopolymer film comprises a layered structure comprising or consisting of PHA layer - tie layer - regrind layer - PGA layer- regrind layer - tie layer - PHA layer.

As used herein, a "regrind layer" may refer to a layer comprising or consisting of a blend of the materials of all layers of the film. Regrind may be produced from scrap material and re-used in the film to reduce costs or improve compatibilization. Typically, including a regrind layer may mean that the thickness of the other layers may be reduced, whilst maintaining barrier properties.

The one or more regrind layers may be obtained by processing waste biopolymer film. The one or more regrind layers may comprise or consist of a blend of the other layers of the biopolymer film. In one embodiment, the one or more regrind layers comprise a blend of PHA and PGA. The PHA and PGA may be any described herein in the sections entitled "Polyhydroxyalkanoates (PHA) layers" and "Polyglycolide (PGA) layers", respectively. In one embodiment, the one or more regrind layers further comprises a tie layer resin. The tie layer resin may be any described herein in the section entitled "Tie layers". In one embodiment, the one or more regrind layers consist of PHA, PGA, and a tie layer resin. The relative amount of each of the PHA, PGA, and optional tie layer resin in the one or more regrind layers may be equal to that found in the biopolymer film.

The regrind layer resin may undergo any suitable processing steps to improve its properties. For example, the one or more regrind layers may comprise or consist of regenerate formed by solid state polymerization (SSP) and/or chain extension. In one embodiment, the one or more regrind layers comprise or consist of regenerate formed by solid state polymerization (SSP). In one embodiment, the one or more regrind layers comprise or consist of regenerate formed by chain extension. In one embodiment, the regrind layers comprise or consist of regenerate formed by chain extension by reactive extrusion. Solid State Polymerization (SSP) may refer to a process in which the polymer chain lengths are increased by heat in the absence of oxygen and water. Chain extension may refer to a process in which chain extenders react with polymer chains to increase their molecular weight. Suitable chain extenders are described herein in the section entitled "Chain extenders".

### Methods of manufacturing biopolymer film

The present invention provides a method of manufacturing a biopolymer film according to the present invention. The method may comprise a step of forming the biopolymer film of the present invention by co-extrusion, co-injection, lamination, coating, layer-by-layer assembly, or electrospinning.

In one embodiment, the method comprises a step of forming the biopolymer film by co-extrusion. In one embodiment, the method comprises: (a) a step of heating a PHA resin and a PGA resin; and (b) a step co-extruding the resins to provide a multi-layer biopolymer film comprising one or more PHA layers and one or more PGA layers. In one embodiment, step (a) further comprises heating a tie layer resin and step (b) further comprises co-extruding the tie layer resin to provide a multi-layer biopolymer film comprising one or more PHA layers, one or more PGA layers, and one or more tie layers. In one embodiment, step (a) further comprises heating a regrind resin and step (b) further comprises co-extruding the regrind resin to provide a multi-layer biopolymer film comprising one or more PHA layers, one or more PGA layers, and one or more re-grind layers. In one embodiment, step (a) further comprises heating a tie layer resin and a regrind resin and step (b) further comprises co-extruding the tie layer resin and the regrind resin to provide a multi-layer biopolymer film comprising one or more PHA layers, one or more PGA layers, one or more tie layers, and one or more re-grind layers.

In one embodiment, the method comprises a step of forming the biopolymer film by co-injection. In one embodiment, the method comprises: (a) a step of heating a PHA resin and a PGA resin; and (b) a step co-injecting the resins to provide a multi-layer biopolymer film comprising one or more PHA layers and one or more PGA layers. In one embodiment, step (a) further comprises heating a tie layer resin and step (b) further comprises co-injecting the tie layer resin to provide a multi-layer biopolymer film comprising one or more PHA layers, one or more PGA layers, and one or more tie layers. In one embodiment, step (a) further comprises heating a regrind resin and step (b) further comprises co-injecting the regrind resin to provide a multi-layer biopolymer film comprising one or more PHA layers, one or more PGA layers, and one or more re-grind layers. In one embodiment, step (a) further comprises heating a tie layer resin and a regrind resin and step (b) further comprises co-injecting the tie layer resin and the regrind resin to provide a multi-layer biopolymer film comprising one or more PHA layers, one or more PGA layers, one or more tie layers, and one or more re-grind layers.

In one embodiment, the method comprises a step of forming the biopolymer film by lamination. In one embodiment, the method comprises a step of forming the biopolymer film by coating. In one embodiment, the method comprises a step of forming the biopolymer film by layer-by-layer assembly or electrospinning.

### Paper-based layers

The present invention provides a composite material comprising the biopolymer film of the present invention and one or more paper-based layers. In one embodiment, the composite material comprises or consists of the biopolymer film of the present invention and a paper-based layer. The composite material may be referred to herein as a multi-layer structure.

As used herein, a "paper-based layer" may comprise or consist of paper pulp. The pulp may comprise cellulose fibres. Any suitable source of pulp may be used in the present invention. The major industrial source of pulp is vascular plants, e.g. wood. The pulp may comprise small amounts of lignin and/or hemicellulose and may comprise water and other additives. In one embodiments, the paper-based layer comprises or consists of recycled paper pulp. In preferred embodiments, the paper-based layer is compostable.

Suitably, a paper-based layer has a thickness of about 0.020 mm or more, about 0.030 mm or more, about 0.040 mm or more, about 0.050 mm or more, about 0.060 mm or more, about 0.070 mm or more, about 0.080 mm or more, about 0.090 mm or more, or about 0.10 mm or more. Suitably, a paper-based layer has a thickness of about 1.2 mm or less, about 1.1 mm or less, about 1.0 mm or less, about 0.9 mm or less, about 0.8 mm or less, about 0.7 mm or less, about 0.6 mm or less, about 0.5 mm or less, about 0.4 mm or less, about 0.3 mm or less, about 0.25 mm or less, about 0.2 mm or less, or about 0.15 mm or less. Suitably, a paper-based layer has a thickness of from about 0.020 mm to about 1.2 mm.

In one embodiment, for example when the biopolymer film is attached to a paper-based layer prior to moulding, the paper-based layer has a thickness of from about 0.020 mm to about 0.15 mm. In other embodiments, for example when the biopolymer film is attached to a paper-based layer after moulding of the paper-based layer, the paper-based layer has a thickness of from about 0.08 mm to about 1.2 mm.

The present invention provides a method of manufacturing a composite material comprising the biopolymer film of the present invention and one or more paper-based layers, the method comprising attaching the biopolymer film of the present invention to a paper-based layer.

The biopolymer film of the present invention may be attached to a paper-based layer by any suitable method. For example, the biopolymer film may be attached to a paper-based layer prior to moulding (e.g. by co-extrusion lamination or coating of the biopolymer film onto a paper-based substrate). For example, the biopolymer film may be attached to a paper-based layer after moulding of the paper-based layer (e.g. by thermoforming the biopolymer film into the moulded paper-based layer, by insert moulding or in-mould labelling onto the interior or exterior surface of the moulded paper-based layer, or by inserting a moulded biopolymer film into the moulded paper-based layer). For example, the biopolymer film may be attached to a paper-based layer by overmoulding or by co-injection of the biopolymer film and a paper-based layer.

### Beverage capsules

The present invention provides a beverage capsule comprising the biopolymer film of the present invention.

As used herein, the term "beverage capsule" encompasses single use packages for preparing beverages by insertion in a beverage preparation device that is adapted to inject a fluid (e.g. hot water) into the package for mixing with a substance contained therein. Examples of such beverage packages are not limited to rigid or semi-rigid capsules, but may also comprise rigid, semi-rigid, or flexible pods, pads, cartridges of various types, and even sachet-type containers. In preferred embodiments, the beverage capsule of the present invention is a rigid or semi-rigid capsule. In more preferred embodiments, the beverage capsule of the present invention is a rigid capsule.

A beverage capsule may comprise a capsule body defining a compartment for containing a substance for preparation of a beverage, such as roast and ground coffee. In preferred embodiments, the capsule body comprises or consists of the biopolymer film of the present invention. The present invention provides a capsule body for a beverage capsule, comprising or consisting of the biopolymer film of the present invention.

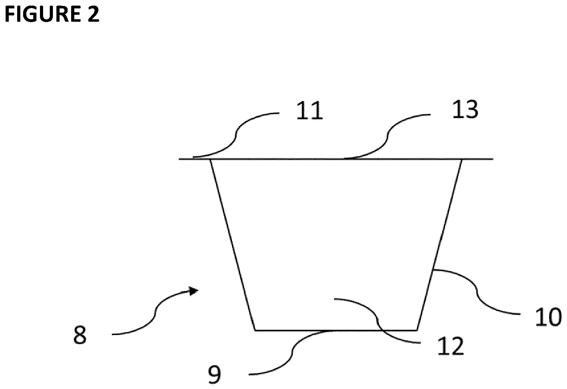

The capsule body may be any suitable shape. In preferred embodiments, the capsule body is a cup-shaped body. In one embodiment, the capsule body comprises a bottom wall, a lateral wall and an annular flange or rim for a cover to seal thereon. For example, illustrated in the embodiment of **figure 2** is a beverage capsule 8 comprising a capsule body defining a compartment 12 for containing a substance for preparation of a beverage, wherein the capsule body comprises a bottom wall 9, a lateral wall 10 and an annular flange or rim 11. The bottom wall 9 may be pierced by a piercing member of a beverage preparation device and liquid injected under pressure into the compartment 12. In one embodiment, the bottom wall is adapted to be pierced by a piercing member of a beverage preparation device. In one embodiment, the lateral wall 10, when seen in a longitudinal section, is inclined with respect to a longitudinal axis of the capsule body.

The capsule body may be closed by attaching (e.g. by sealing) a cover, for instance a membrane or a film, to it. In one embodiment of the invention, the capsule body comprises an annular flange or rim onto which a cover is attached. For example, illustrated in the embodiment of **figure 2** is a beverage capsule 8 comprising a cover 13. Preferably the cover is an oxygen barrier and a moisture barrier. The cover may be made from any known material, for example an extrusion coated paper, a fiber-spinning coated paper, or a polymer film. In preferred embodiments, the cover is made from a compostable material (e.g. a biopolymer film). When the pressure increases in the capsule following injection and reaches a certain level, the cover may deflect outwardly and pierce onto a piercing means of the beverage preparation device. When the cover is pierced, the beverage can flow outside the capsule. In one embodiment, the cover is adapted to pierce onto opening means of a beverage preparation device when pressure inside the capsule reaches a pre-determined value. In one embodiment, the biopolymer film and the cover overlap. Suitably, the overlap is from about 1 mm to about 3 mm. Such an overlap can reduce gas or moisture penetration.

In one embodiment, the biopolymer film of the present invention forms the capsule body. In another embodiment, a paper-based layer forms the capsule body and the biopolymer film of the present invention is attached to the paper-based layer (e.g. is a barrier layer). In one embodiment, the paper-based layer forms the exterior surface of the capsule body. In one embodiment, the paper-based layer forms the interior surface of the capsule body.

The capsule may contain a substance for preparation of a beverage. The substance may be selected from roast and ground coffee, compacted or not, soluble powder coffee, or leaf tea. Dairy ingredients (e.g., milk or creamer) can also be included. In one embodiment, the substance for preparation of a beverage is roast and ground coffee, a soluble ingredient, or a mix of soluble ingredients. In preferred embodiments, the substance for preparation of a beverage is roast and ground coffee. The injected liquid may interact with the substance contained therein to obtain a beverage. In preferred embodiments, the injected liquid is hot water.

The capsule may be essentially oxygen-free. Empty space in the compartment defined by the capsule body and the cover may be saturated with an inert gas such as nitrogen, carbon dioxide, and combinations thereof. In one embodiment, the capsule has an internal pressure of gas above atmospheric pressure, due to the gas contained in the coffee and emanating in the compartment after sealing, such as carbon dioxide.

In one embodiment, the capsule is biodegradable. In one embodiment, the capsule is biodegradable in compost, soil, and/or marine environments. In one embodiment, the capsule is biodegradable in compost, soil, and marine environments.

In preferred embodiments, the capsule is compostable. As used herein, a "compostable" product may be one that is biodegradable under aerobic conditions, without producing any toxic compounds (see e.g. Helanto, K.E., et al., 2019. BioResources, 14(2), pp.4902-49510). Any standard may be used to assess whether a product is compostable. Suitable standards to assess compostability include AS 4736, ASTM D5338, ASTM D6002, EN 13432, and ISO 14855.

In one embodiment, the capsule is home compostable. Home compostability may be defined on a national level based on international standard EN 13432. Materials or products compliant with these standards can be recognised by a conformity mark stating their home compostability. Some examples of home composability certifications at a national level include, but are not limited to, the following. The certifier TUV AUSTRIA BELGIUM offers such a home composability certification scheme, and DIN CERTCO offers a certification for home composability according to the Australian standard AS 5810. Italy has a national standard for composting at ambient temperature, UNI 11183:2006. In November 2015, the French Standard "NF T 51-800 Plastics - Specifications for plastics suitable for home composting" was introduced. This standard is covered in the DIN CERTCO scheme.

In preferred embodiments, the capsule is single-use. A "single-use" product may be one that is designed to be used once and then disposed of. In one embodiment, the capsule is a single-serve beverage capsule. A "single-serve" capsule may be one that is designed to prepare only enough beverage for a single portion.

In preferred embodiments, the capsule has a shelf-life of at least about 2 months, at least about 3 months, at least about 4 months, at least about 5 months, at least about 6 months, at least about 7 months, at least about 8 months, at least about 9 months, or at least about 12 months. In one embodiment, the capsule has a shelf-life of from about 3 to about 12 months or from about 6 to about 9 months. The shelf-life may be assessed by any suitable method known in the art, for example by gas chromatography-mass spectrometry and/or consumer evaluation. For example, the shelf-life may be determined by monitoring the ratio of dimethyl disulfide/methanethiol and/or 2-butanone/methanethiol (see e.g. Glöss, A., et al., 2014. Chimia, 68(3), pp.179-182).

### Methods of manufacturing capsule body

The present invention provides a method of manufacturing a capsule body for a beverage capsule, wherein the capsule body comprises or consists of the biopolymer film of the present invention. The method may comprise moulding a biopolymer film of the present invention to form at least one layer of a multi-layer capsule body. The biopolymer film may be any described herein.

In one embodiment, the method comprises moulding a biopolymer film of the present invention to form a capsule body consisting of the biopolymer film.

In other embodiments, the method comprises: (a) providing a paper-based capsule body; and (b) attaching a biopolymer film of the present invention to the capsule body.

In other embodiments, the method comprises: (a) providing a paper-based layer; (b) attaching a biopolymer film of the present invention to the paper-based layer to provide a multi-layer structure comprising a paper-based layer and a biopolymer layer; and (c) forming the multi-layer structure to provide a capsule body.

The biopolymer film or multi-layer structure may be moulded by any suitable method, for example by thermoforming or in mould-labelling. In one embodiment, the biopolymer film or multi-layer structure is moulded by thermoforming. In one embodiment, the biopolymer film or multi-layer structure is attached to the paper-based layer by in-mould labelling, whereby a thin label-like sheet of biopolymer film is placed in a mould, the mould is closed and a cellulosic-based composition is injected therein to form a three-dimensional item made of a multilayer comprising paper-based and biopolymer layers.

### Thermoforming

In one embodiment, the method comprises thermoforming a biopolymer film of the present invention to form at least one layer of a multi-layer capsule body. The biopolymer film may be attached to any other layers (e.g. a paper based layer), i.e. in the form of a multi-layer structure.

As used herein, "thermoforming" may refer to a manufacturing process where a polymer film is heated to a forming temperature, formed to a specific shape in a mould, and optionally trimmed. Common methods of thermoforming include vacuum forming, pressure forming, or mechanical forming.

In one embodiment, the biopolymer film or multi-layer structure is thermoformed by vacuum forming. Vacuum forming makes use of a vacuum to shape the film. The film is heated to ensure it is flexible and then a vacuum forming machine pulls the air out, forcing the film against a mould. The vacuum process is known for its cost-effectiveness and the speed of the manufacturing process.

In one embodiment, the biopolymer film or multi-layer structure is thermoformed by pressure forming. Pressure forming makes further use of pressure to shape the film. The film is heated to ensure it is flexible, a vacuum is used to force the film against a mould, and then a pressing tool applies pressure to ensure the shaped film better maintains its shape.

In one embodiment, the biopolymer film or multi-layer structure is thermoformed by mechanical forming. Mechanical forming involves the use of a direct mechanical force to shape the preheated film. A core plug forces the flexible sheet to fill a space between the plug and the mould.

Any suitable conditions may be used to thermoform the biopolymer or multi-layer structure. Suitably, the biopolymer film or multi-layer structure is thermoformed a temperature of at least about 50°C, at least about 60°C, at least about 70°C, at least about 80°C, at least about 90°C, or at least about 100°C. Suitably, the biopolymer film or multi-layer structure is thermoformed a temperature of about 220°C or lower, about 210°C or lower, about 200°C or lower, about 190°C or lower, about 180°C or lower, about 170°C or lower, about 160°C or lower, about 150°C or lower, about 140°C or lower, about 130°C or lower, about 120°C or lower, about 110°C or lower, or about 100°C or lower. Suitably, the biopolymer film or multi-layer structure is thermoformed a temperature of from about 60°C to about 220°C, from about 60°C to about 200°C, from about 60°C to about 180°C, from about 60°C to about 160°C, from about 60°C to about 140°C, from about 60°C to about 120°C, or from about 70°C to about 110°C.

Suitably, the biopolymer film or multi-layer structure is contacted with a mould for at least about 1 second, at least about 2 seconds, at least about 3 seconds, at least about 4 seconds, at least about 5 seconds, at least about 10 seconds, or at least about 20 seconds. Suitably, the biopolymer film or multi-layer structure is contacted with a mould for about 60 seconds or less, about 50 seconds or less, about 40 seconds or less, or about 30 seconds or less. Suitably, the biopolymer film or multi-layer structure is contacted with a mould for from about 1 to about 60 seconds, from about 1 to about 50 seconds, from about 1 to about 40 seconds, from about 1 to about 30 seconds, from about 2 to about 30 seconds, from about 3 to about 30 seconds, from about 4 to about 30 seconds, or from about 5 to about 30 seconds.

In one embodiment, the method comprises: (a) forming the biopolymer film of the present invention into the shape of a capsule body. In one embodiment, the formed biopolymer film is not inserted into a paper-based capsule body (e.g. to provide a capsule body consisting of the biopolymer film).

In other embodiments, the method comprises: (a) forming the biopolymer film of the present invention e.g. into a cup-shape; (b) inserting the formed biopolymer film into a paper-based capsule body; and optionally (c) further forming or moulding the biopolymer film, to provide a multi-layer capsule body comprising or consisting of a paper-based layer and a biopolymer film. Suitably, the biopolymer film has a thickness of up to about 1.0 mm, for example, from about 0.5 mm to about 1.0 mm.

In other embodiments, the method comprises: (a) forming the biopolymer film of the present invention into a paper-based capsule body to provide a multi-layer capsule body comprising or consisting of a paper-based layer and a biopolymer film. For example, the biopolymer film may be thermoformed into a paper-based capsule body in-line.

In other embodiments, the method comprises: (a) attaching the biopolymer film of the present invention to a paper-based layer to provide a multi-layer structure comprising a paper-based layer and a biopolymer layer; and (b) forming the multi-layer structure to provide a multi-layer capsule body comprising or consisting of a paper-based layer and a biopolymer film.

### In-mould labelling

In one embodiment, the method comprises attaching a biopolymer film of the present invention to a capsule body by in-mould labelling. The capsule body may be formed from any suitable material, for example the capsule body may be a paper-based capsule body or biopolymer-based capsule body.

As used herein, "in-mould labelling" may refer to the use of polymer labels during the manufacturing of containers, in which the label serves as an integral part of the final product. In-mould labelling may be used to attach a polymer film to the exterior surface or interior surface of a container. In one embodiment, the biopolymer film forms the exterior surface of the capsule body. In other embodiments, the biopolymer film forms the interior surface of the capsule body.

Any suitable in-mould labelling method may be used to attach the biopolymer film to the capsule body (see e.g. EP2236264, WO2012022672, and WO2013026651).

Any suitable in-mould labelling method may be used to attach the biopolymer film to the capsule body (see e.g. EP2236264, WO2012022672, and WO2013026651). In one embodiment, the biopolymer film has a general shape of a flat arc segment. In one embodiment, the step of attaching the biopolymer film to the capsule body by in-mould labelling comprises: (i) positioning the biopolymer film into a mould; and (ii) injecting a thermoplastic material (e.g. paper pulp) into the mould so as to form a capsule body which is labelled on its inside or outside surface with the biopolymer film. In one embodiment, the step of attaching the biopolymer film to the capsule body by in-mould labelling comprises: (i) positioning and then forming the biopolymer film around a core having a frusto-conical shape, to provide a frusto-conical label band; (ii) optionally punching the small apex of the label band so as to deform it inwardly and create an inward step edge; (iii) positioning the label band inside a mould and closing the mould; and (iv) injecting a thermoplastic material (e.g. paper pulp) into the mould so as to form a capsule body which is labelled on its inside or outside surface with the biopolymer film. In one embodiment, the biopolymer film comprises fringes on the smallest edge of the arc segment, so that the punching step bends said fringes inwardly, creating at least partial overlaps between adjacent fringes.

### Methods of manufacturing beverage capsules

The present invention provides a method of manufacturing a beverage capsule, wherein the capsule body comprises or consists of the biopolymer film of the present invention. The method may comprise moulding a biopolymer film of the present invention to form at least one layer of a multi-layer capsule body. The biopolymer film may be any described herein.

In one embodiment, the method comprises: (a) providing a capsule body according to the present invention, (b) filling the capsule body with a substance for preparation of a beverage, and (c) closing the capsule body with a cover. The capsule body may be filled using an auger filling. The method may comprise any other suitable steps. For example, the capsule body may be: cleaned and/or sterilised (i) prior to filling and/or (ii) after filling and prior to sealing. The capsule may be flushed with an inert gas (e.g. nitrogen) and/or pressurised prior to sealing the capsule body with the cover. The capsule may be subsequently packaged into boxes etc.

### Example

The invention will now be further described by way of an example, which is meant to serve to assist one of ordinary skill in the art in carrying out the invention and is not intended in any way to limit the scope of the invention.

A thin film of biopolymer is co-extruded, comprising in order, the following layers:
- A first layer of carboxilated PHBH modified by reactive extrusion with 1% of a chain extender or branching agent Joncryl ADR-4368, this layer having a thickness of 66 µm, then
- A second layer of a tie layer consisting of BTR8002P, this layer having a thickness of 4 µm, then
- A third, middle layer consisting of PGA, having a thickness of 10 µm, then
- A fourth layer of a tie layer consisting of BTR8002P, this layer having a thickness of 4 µm, then
- A fifth layer of carboxilated PHBH modified by reactive extrusion with 1% of a chain extender or branching agent Joncryl ADR-4368, this layer having a thickness of 66 µm.

The resulting multilayer film has an OTR of 0.5 cc/m²/day/atm at 23°C/50% RH and 1 g/m²/day.

The resulting film is thermoformed into a cup-shaped cellulose (paper) pulp moulded capsule, by using a thermoforming process as described above.

### Embodiments

Various preferred features and embodiments of the present invention will now be described with reference to the following numbered paragraphs (paras).
1. A capsule for preparation of a beverage upon injection of liquid under pressure into the capsule, wherein the capsule body comprises or consists of a biopolymer film comprising polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.
2. The capsule according to para 1, wherein the PHA is selected from poly(3-hydroxybutyrate) (PHB), poly(3-hydroxyvalerate) (PHV), poly(3-hydroxybutyrate-co-3-hydroxyvalerate) (PHBV), poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxy undecenoate) (PHU), poly(3-hydroxy octanoate-co-undecenoate) (PHOU), and any copolymer and/or blend thereof.
3. The capsule according to para 1 or 2, wherein the PHA is selected from medium-chain length PHAs and long-chain length PHAs, optionally wherein the PHA is selected from poly(3-hydroxyhexanoate) (PHHx), poly(3-hydroxybutyrate-co-3-hydroxyhexanoate) (PHBH), poly(3-hydroxyoctanoate) (PHO), poly(3-hydroxydecanoate) (PHD), poly(3-hydroxydodecanoate) (PHDD), poly(3-hydroxy undecenoate) (PHU), poly(3-hydroxy octanoate-co-undecenoate) (PHOU), and any copolymer and/or blend thereof.
4. The capsule according to any preceding para, wherein the PHA has a molecular mass of from about 50 kDa to about 300 kDa.
5. The capsule according to any preceding para, wherein the PHA has a melting point of 180°C or less, 170°C or less, 160°C or less, or 150°C or less.
6. The capsule according to any preceding para, wherein the PHA is functionalised, optionally wherein the PHA is functionalised by carboxylation, hydroxylation, epoxidation, or by grafting.
7. The capsule according to any preceding para, wherein the one or more chain extenders are addition-type chain extenders that react with carboxyl and/or hydroxyl terminal groups.
8. The capsule according to any preceding para, wherein the one or more chain extenders are multi-functional chain extenders.
9. The capsule according to any preceding para, wherein the one or more chain extenders comprise or consist of one or more addition-type chain extenders that react with carboxyl terminal groups.
10. The capsule according to any preceding para, wherein the one or more chain extenders comprise or consist of one or more addition-type chain extenders that react with hydroxyl terminal groups.
11. The capsule according to any preceding para, wherein the one or more chain extenders comprise or consist of one or more addition-type chain extenders that react with carboxyl terminal groups and hydroxyl terminal groups.
12. The capsule according to any preceding para, wherein the one or more chain extenders comprise or consist of an epoxy-based chain extender, optionally wherein the one or more chain extenders comprise or consist of a Joncryl chain extender.
13. The capsule according to any preceding para, wherein the one or more chain extenders comprise or consist of a phosphate/phosphite-based chain extender, optionally wherein the one or more chain extenders comprise or consist of triphenylphosphite (TPP) or tris(nonyl-phenyl)phosphite (TNPP).
14. The capsule according to any preceding para, wherein the one or more chain extenders comprise or consist of a carbodiimide-based chain extender, optionally wherein the one or more chain extenders comprise or consist of polycarbodiimide (PCDI).
15. The capsule according to any preceding para, wherein the one or more chain extenders comprise or consist of an anhydride-based chain extender, optionally wherein the one or more chain extenders comprise or consist of pyromellitic dianhydride (PMDA).
16. The capsule according to any preceding para, wherein the one or more compatibilizers comprise or consist of one or more reactive compatibilizers.
17. The capsule according to any preceding para, wherein the one or more compatibilizers comprise or consist of epoxy-based compatibilizers, acrylic-based compatibilizers, or maleic anhydride-based compatibilizers, optionally wherein the one or more compatibilizers comprise or consist of epoxy-based compatibilizers.
18. The capsule according to any preceding para, wherein the one or more compatibilizers comprise or consist of a terpolymer of ethylene, acrylic ester and glycidyl methacrylate (EMA-GMA), maleic anhydride (MAH), epoxidized soy-bean oil (ESO), epoxidized-acrylated soybean oil (AESO), and/or maleinized soybean oil (MSO).
19. The capsule according to any preceding para, wherein the PGA has a molecular mass of from about 20 kDa to about 500 kDa.
20. The capsule according to any preceding para, wherein the PGA has a melting point of 200°C or higher, 210°C or higher, 220°C or higher, or 230°C or higher.
21. The capsule according to any preceding para, wherein the biopolymer film further comprises one or more tie layers.
22. The capsule according to any preceding para, wherein the biopolymer film comprises a layered structure comprising PHA layer - tie layer - PGA layer - tie layer - PHA layer.
23. The capsule according to para 21 or 22, wherein the tie layers comprise or consist of an adhesive resin and/or a compatibilizer.
24. The capsule according to any of paras 21-23, wherein the tie layers comprise or consist of a biodegradable adhesive resin, optionally wherein the tie layers comprise or consist of BTR8002P.
25. The capsule according to any preceding para, wherein the biopolymer film further comprises one or more regrind layers.
26. The capsule according to any preceding para, wherein the biopolymer film comprises a layered structure comprising PHA layer - regrind layer - tie layer - PGA layer - tie layer - regrind layer - PHA layer.
27. The capsule according to para 25 or 26, wherein the regrind layers comprise a blend of PHA and PGA.
28. The capsule according to any of paras 25 to 27, wherein the regrind layers comprise or consist of a regenerate formed by solid state polymerization (SSP) and/or chain extension.
29. The capsule according to any preceding para, wherein each PHA layer has a thickness of from about 0.001 mm to about 0.50 mm, from about 0.002 mm to about 0.10 mm, or from about 0.003 mm to about 0.05 mm.
30. The capsule according to any preceding para, wherein the PGA layer has a thickness of from about 0.001 mm to about 0.50 mm, from about 0.002 mm to about 0.10 mm, or from about 0.003 mm to about 0.05 mm.
31. The capsule according to any preceding para, wherein the biopolymer film has a total thickness of from about 0.15 mm to about 0.70 mm, from about 0.16 mm to about 0.60 mm, or from about 0.17 mm to about 0.50 mm.
32. The capsule according to any preceding para, wherein the biopolymer film is formed by co-extrusion.
33. The capsule according to any of paras 1 to 31, wherein the biopolymer film is formed by co-injection.
34. The capsule according to any preceding para, wherein the biopolymer film is an oxygen barrier.
35. The capsule according to any preceding para, wherein the biopolymer film has an oxygen transmission rate of about 1 cm³/m²/day/atm or less at 23°C/50%RH.
36. The capsule according to any preceding para, wherein the biopolymer film is a moisture barrier.
37. The capsule according to any preceding para, wherein the biopolymer film has a water vapour transmission rate of about 1 g/m²/day or less at 23°C/85% RH.
38. The capsule according to any preceding para, wherein the biopolymer film is thermoformable.
39. The capsule according to any preceding para, wherein the biopolymer film has a melt flow index (MFI) of from 0.5 g/10min to 25 g/10min, from 5 g/10min to 25 g/10min, from 10 g/10min to 25 g/10min, from 15 g/10min to 25 g/10min, or from 15 g/10min to 20 g/10min, optionally wherein the MFI is determined at 190°C or lower with a test load of 2.16 kg or 5 kg.
40. The capsule according to any preceding para, wherein the capsule body further comprises a paper-based layer.
41. The capsule according to para 40, wherein the paper-based layer forms the exterior surface of the capsule body.
42. The capsule according to para 40 or 41, wherein the paper-based layer forms the interior surface of the capsule body.
43. The capsule according to any of paras 40 to 42, wherein the biopolymer film is attached to the paper-based layer.
44. The capsule according to any preceding para, wherein the capsule body is cup-shaped and/or wherein the capsule body comprises a bottom wall, a lateral wall and an annular flange for a cover to seal thereon.
45. The capsule according to para 44, wherein the bottom wall is suitable for being pierced by a piercing member of a beverage preparation device.
46. The capsule according to any preceding para, wherein the capsule further comprises a cover for closing the capsule body.
47. The capsule according to any preceding para, wherein the capsule contains a substance for preparation of a beverage, optionally wherein the substance for preparation of a beverage is roast and ground coffee, a soluble ingredient, or a mix of soluble ingredients, preferably wherein the substance for preparation of a beverage is roast and ground coffee.
48. The capsule according to any preceding para, wherein the capsule is compostable.
49. The capsule according to any preceding para, wherein the capsule is a single use capsule.
50. The capsule according to any preceding para, wherein the capsule has a shelf-life of at least 6 months, at least 9 months, or at least 12 months.
51. Use of a biopolymer film for manufacturing a beverage capsule, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.
52. A method of manufacturing a beverage capsule, the method comprising moulding a biopolymer film to form a capsule body, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.
53. The method of para 52, wherein the capsule is defined according to any of paras 1 to 50.
54. A method of manufacturing a beverage capsule, the method comprising:
   (a) providing a paper-based capsule body; and
   (b) attaching a biopolymer film to the capsule body, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.
55. A method of manufacturing a beverage capsule, the method comprising:
   (a) providing a paper-based layer;
   (b) attaching a biopolymer film to the paper-based layer to provide a multi-layer structure comprising a paper-based layer and a biopolymer layer, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers; and
   (c) forming the multi-layer structure to provide a capsule body.
56. The method of para 54 or 55, wherein the capsule is defined according to any of paras 40 to 50.
57. Use of a capsule according to any of paras 1 to 50 to prepare a beverage.
58. A method of preparing a beverage, the method comprising injecting pressurized liquid into a capsule according to any of paras 1 to 50 and allowing a beverage to flow out of the capsule.

## Claims

1. A capsule for preparation of a beverage upon injection of liquid under pressure into the capsule, wherein the capsule body comprises or consists of a biopolymer film comprising polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.

2. The capsule according to claim 1, wherein the PHA is functionalised, optionally wherein the PHA is functionalised by carboxylation, hydroxylation, epoxidation, or by grafting.

3. The capsule according to claim 1 or 2, wherein the one or more chain extenders are multi-functional addition-type chain extenders that react with carboxyl and/or hydroxyl terminal groups, preferably wherein the one or more chain extenders comprise or consist of:
(a) an epoxy-based chain extender, optionally wherein the one or more chain extenders comprise or consist of a Joncryl chain extender;
(b) a phosphate/phosphite-based chain extender, optionally wherein the one or more chain extenders comprise or consist of triphenylphosphite (TPP) or tris(nonyl-phenyl)phosphite (TNPP);
(c) a carbodiimide-based chain extender, optionally wherein the one or more chain extenders comprise or consist of polycarbodiimide (PCDI); and/or
(d) an anhydride-based chain extender, optionally wherein the one or more chain extenders comprise or consist of pyromellitic dianhydride (PMDA).

4. The capsule according to any preceding claim, wherein the one or more compatibilizers comprise or consist of:
(a) epoxy-based compatibilizers, acrylic-based compatibilizers, or maleic anhydride-based compatibilizers, preferably wherein the one or more compatibilizers comprise or consist of epoxy-based compatibilizers; and/or
(b) a terpolymer of ethylene, acrylic ester and glycidyl methacrylate (EMA-GMA), maleic anhydride (MAH), epoxidized soy-bean oil (ESO), epoxidized-acrylated soybean oil (AESO), and/or maleinized soybean oil (MSO), preferably wherein the one or more compatibilizers comprise or consist of EMA-GMA.

5. The capsule according to any preceding claim, wherein the biopolymer film further comprises:
(a) one or more tie layers, optionally wherein the biopolymer film comprises a layered structure comprising PHA layer - tie layer - PGA layer - tie layer - PHA layer, preferably wherein the tie layers comprise or consist of a biodegradable adhesive resin, more preferably wherein the tie layers comprise or consist of BTR8002P; and/or
(b) one or more regrind layers, optionally wherein the biopolymer film comprises a layered structure comprising PHA layer - regrind layer - PGA layer -regrind layer - PHA layer, preferably wherein the regrind layers comprise or consist of a regenerate formed by solid state polymerization (SSP) and/or chain extension.

6. The capsule according to any preceding claim, wherein:
(a) the biopolymer film is an oxygen barrier and/or wherein the biopolymer film has an oxygen transmission rate of about 1 cm³/m²/day/atm or less at 23°C/50%RH.
(b) the biopolymer film is a moisture barrier and/or wherein the biopolymer film has a water vapour transmission rate of about 1 g/m²/day or less at 23°C/85% RH; and/or
(c) the biopolymer film is thermoformable and/or wherein the biopolymer film has a melt flow index (MFI) of from 0.5 g/10min to 25 g/10min determined at 190°C or lower with a test load of 2.16 kg or 5 kg.

7. The capsule according to any preceding claim, wherein the capsule body further comprises a paper-based layer.

8. The capsule according to any preceding claim, wherein:
(a) the capsule body is cup-shaped and/or comprises a bottom wall, a lateral wall and an annular flange for a cover to seal thereon, preferably wherein the bottom wall is suitable for being pierced by a piercing member of a beverage preparation device;
(b) the capsule further comprises a cover for closing the capsule body; and/or
(c) the capsule contains a substance for preparation of a beverage, optionally wherein the substance for preparation of a beverage is roast and ground coffee, a soluble ingredient, or a mix of soluble ingredients, preferably wherein the substance for preparation of a beverage is roast and ground coffee.

9. The capsule according to any preceding claim, wherein the capsule is compostable and/or wherein the capsule has a shelf-life of at least 6 months, at least 9 months, or at least 12 months.

10. Use of a biopolymer film for manufacturing a beverage capsule according to any of claims 1 to 9, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.

11. A method of manufacturing a beverage capsule, the method comprising moulding a biopolymer film to form a capsule body according to any of claims 1 to 9, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.

12. A method of manufacturing a beverage capsule according to any of claims 7 to 9, the method comprising:
(a) providing a paper-based capsule body; and
(b) attaching a biopolymer film to the capsule body, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers.

13. A method of manufacturing a beverage capsule according to any of claims 7 to 9, the method comprising:
(a) providing a paper-based layer;
(b) attaching a biopolymer film to the paper-based layer to provide a multi-layer structure comprising a paper-based layer and a biopolymer layer, wherein the biopolymer film comprises polyhydroxyalkanoate (PHA) and polyglycolide (PGA), wherein the biopolymer film comprises a layered structure comprising PHA layer - PGA layer - PHA layer, and wherein the PHA has been chemically modified with one or more chain extenders and/or one or more compatibilizers; and
(c) forming the multi-layer structure to provide a capsule body.

14. Use of a capsule according to any of claims 1 to 9 to prepare a beverage.

15. A method of preparing a beverage, the method comprising injecting pressurized liquid into a capsule according to any of claims 1 to 9 and allowing a beverage to flow out of the capsule.
